# EUROPEAN PATENT APPLICATION

(11) **EP 1 433 626 A2**
(43) Date of publication of application: **30.06.2004**
(21) Application number: 03028688.4
(22) Date of filing: 16.12.2003
(51) Int. Cl.: B60C 23/04

(54) **Tire condition monitoring apparatus**

(30) Priority: 25.12.2002 JP 2002375025
(71) Applicant: Pacific Industrial Co., Ltd., Ogaki-shi, Gifu-ken 503-8603 (JP)
(72) Inventor: Tsujita, Yasuhisa, Ogaki-shi Gifu-ken 503-8603 (JP)
(74) Representative: Breit, Ulrich, Dr.

(57) **Abstract**

A tire condition monitoring apparatus for use in a vehicle. The apparatus includes an initiator (60) arranged on a nonmetallic mudguard (12) of the vehicle. The initiator transmits a trigger signal. A transmitter (30) is arranged in the tire (20) and includes a sensor (32) for detecting the condition of the tire. A trigger signal detection circuit (35) receives the trigger signal. A transmission circuit (33) transmits information related with the tire condition when the detection circuit receives the trigger signal. A receiver (40) is arranged on a body frame of the vehicle. The receiver includes a reception circuit (45) for receiving the information from the transmitter (30) and a controller (44) for controlling the transmission of the trigger signal from the initiator.

## Description

### BACKGROUND OF THE INVENTION

The present invention relates to a wireless tire condition monitoring apparatus that permits a driver in a vehicle passenger compartment to check the conditions of tires, such as the air pressure.

Wireless tire condition monitoring apparatuses that enable a driver in a vehicle passenger compartment to check the conditions of vehicle tires have been proposed. These monitoring systems include transmitters and a receiver. Each transmitter is located in one of the wheels and the receiver is located in the body frame of the vehicle. Each transmitter detects the conditions, such as air pressure and the temperature, of the associated tire and wirelessly transmits the detected information. The receiver receives data from the transmitters with an antenna and shows the data indicating the conditions of each tire on a display arranged, for example, near the driver seat.

European Patent Publication No. 1026015 describes a wireless tire condition monitoring apparatus including a plurality of exciters, each provided with a primary coil. The primary coil is located near a tire monitor (transmitter) of an associated one of the tires to activate and interrogate the tire monitor. However, the tire monitor associated with the primary coil may not be properly activated and interrogated depending on the position of the primary coil.

### SUMMARY OF THE INVENTION

Accordingly, it is an object of the present invention to provide a tire condition monitoring apparatus capable of ensuring the correct functioning of a transmitter.

To achieve the above object, the present invention provides an apparatus for monitoring a condition of a tire on a vehicle. The vehicle includes a nonmetallic portion near the tire and a body frame. The apparatus includes an initiator arranged on the nonmetallic portion. The initiator transmits a trigger signal. A transmitter is arranged in the tire. The transmitter includes a sensor for detecting the condition of the tire, a receiving section for receiving the trigger signal, and a transmission section for transmitting a response signal when the receiving section receives the trigger signal. The response signal includes information related with the condition of the tire detected by the sensor. A receiver is arranged on the body frame. The receiver includes a reception section for receiving the response signal from the transmitter and a controller for controlling the transmission of the trigger signal from the initiator.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a block diagram showing a tire condition monitoring apparatus according to one embodiment of the present invention;
Fig. 2 is a block diagram showing one of the transmitters shown in Fig. 1;
Fig. 3(a) is a front view showing an initiator arranged on a mudguard;
Fig. 3(b) is a side view showing the initiator arranged on the mudguard;
Fig. 4 is a block diagram showing the receiver shown in Fig. 1;
Fig. 5(a) is a front view showing an example of an initiator arranged in a mudguard; and
Fig. 5(b) is a cross-sectional view showing the example of the initiator arranged in the mudguard.

### DETAILED DESCRIPTION OF THE PREFERRED EMBODIMENTS

A tire condition monitoring apparatus 1 according to a preferred embodiment of the present invention will now be described with reference to the drawings. The apparatus 1 is used in a vehicle such as an automobile.

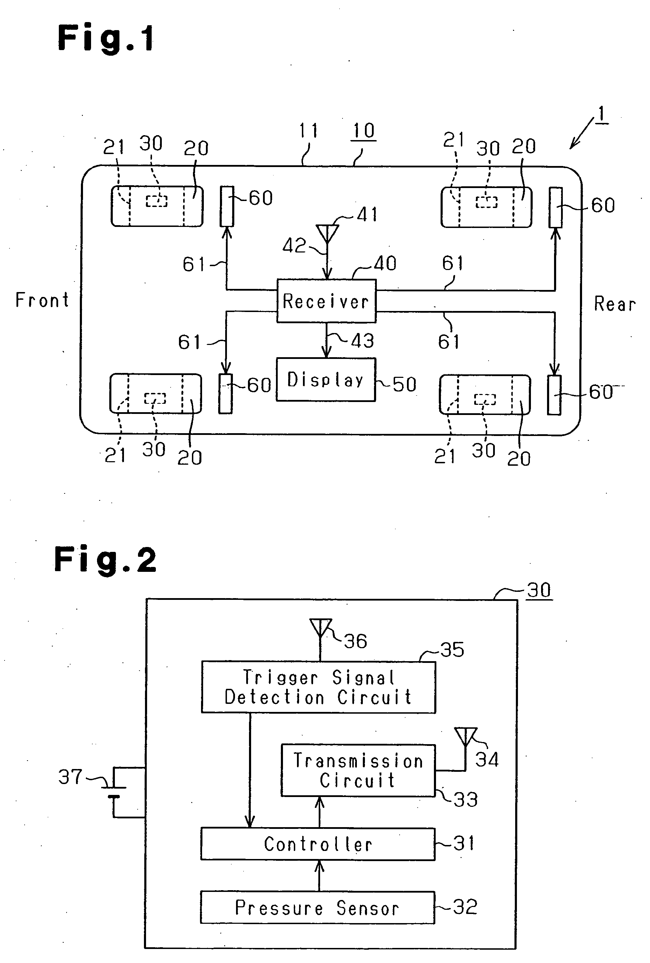

As shown in Fig. 1, the tire condition monitoring apparatus 1 includes four transmitters 30 and a receiver 40. Each transmitter 30 is located in one of the tires 20 of a vehicle 10. The receiver 40 is located on a body frame 11 of the vehicle 10.

Each transmitter 30 is located in the corresponding tire 20 and is fixed, for example, to a wheel 21 of the tire 20. Each transmitter 30 measures the condition of the corresponding tire 20, that is, the pressure of the tire 20. The transmitter 30 then wirelessly transmits data containing air pressure data.

The receiver 40 is located at a predetermined position on the body frame 11 and is powered by a battery (not shown) of the vehicle 10. The receiver 40 includes a reception antenna 41. The reception antenna 41 is connected to the receiver 40 by a cable 42. The cable 42 is preferably a coaxial cable, which is insignificantly influenced by noise. The receiver 40 receives data transmitted by the transmitters 30 through the reception antenna 41.

A display 50 is located in the view of the driver of the vehicle 10, for example, in the passenger compartment. The display 50 is connected to the receiver 40 by a cable 43.

The receiver 40 is provided with four initiators 60, each associated with one of the four transmitters 30. Each initiator 60 is connected to the receiver 40 by a cable 61. The receiver 40 causes each initiator 60 to wirelessly transmit a trigger signal. When each transmitter 30 receives a trigger signal from the associated initiator 60, the transmitter 30 immediately measures the air pressure of the corresponding tire 20 and wirelessly transmits data that includes air pressure data generated through the measurement.

With reference to Fig. 2, each transmitter 30 has a transmitter controller 31, tire pressure sensor 32, transmission circuit 33 (transmission section), transmission antenna 34, trigger signal detection circuit 35 (receiving section), and trigger signal reception antenna 36. The transmitter controller 31 is, for example, a microcomputer. The transmitter controller 31 includes, for example, a central processing unit (CPU), a read only memory (ROM), and a random access memory (RAM). A unique ID code (identification information) is registered in an internal memory, for example, the ROM, of the transmitter controller 31. The ID code is used to distinguish the associated transmitter 30 from the other three transmitters 30.

The tire pressure sensor 32 measures the air pressure in the interior of the associated tire 20 and provides the transmitter controller 31 with pressure data, which is obtained from the measurement. Each transmitter controller 31 sends data containing the air pressure data and the registered ID code to the transmission circuit 33. The transmission circuit 33 encodes and modulates the data sent from the transmitter controller 31. The transmission circuit 33 then wirelessly transmits the data through a transmission antenna 34.

The trigger signal detection circuit 35 detects a trigger signal from the associated initiator 60 through the trigger signal reception antenna 36. When the trigger signal detection circuit 35 detects the trigger signal, the information is transmitted to the transmitter controller 31. Each transmitter 30 is provided with a battery 37. The transmitter 30 is powered by the battery 37.

The transmitter controller 31 performs the measurement operation with the pressure sensor 32 when a trigger signal is detected through the trigger signal reception antenna 36. Also, the transmitter controller 31 controls the transmission circuit 33 to perform periodic transmission each time the pressure sensor 32 completes a predetermined number of (e.g., 40 cycles of) measurements. Further, the transmitter controller 31 causes the transmission circuit 33 to perform transmission irrelative to the periodic transmission when the air pressure in the associated tire 20 is recognized as being abnormal.

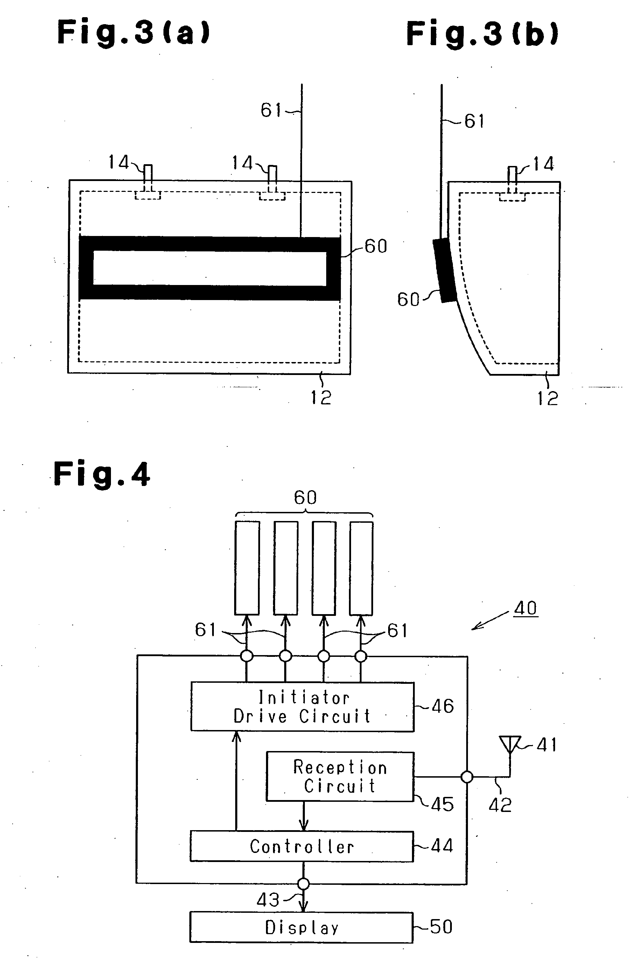

As shown in Figs. 3(a) and 3(b), each initiator 60 is provided on a mudguard 12 (nonmetallic portion), which protects the body frame 11 from mud and rain splashed by the tire 20. The mudguard 12 is attached to the body frame 11 by bolts 14. The mudguard 12 is formed by a nonmetallic element, such as, a synthetic resin insulator. Thus, the radio waves from the transmitter 30 are not affected by a metallic element. As a result, the mudguard 12 insignificantly affects the signal receiving performance of the receiver 40. The initiator 60 includes a transmission coil, which is formed by winding a coil a predetermined number of times around a ferrite core, and a capacitor tuned to a resonant frequency. Further, the initiator 60 is provided on the surface of the mudguard 12 facing towards the tire 20.

As shown in Fig. 4, the receiver 40 includes a reception controller 44 and a reception circuit (reception section) 45. The reception controller 44 processes data received with the reception antenna 41. The reception controller 44, which is, for example, a microcomputer, includes a CPU, a ROM, and a RAM. The reception circuit 45 receives data transmitted by the transmitters 30 through the reception antenna 41. The reception circuit 45 demodulates and decodes the received data and sends the data to the reception controller 44.

Based on the received data, the reception controller 44 obtains the air pressure of the tire 20 that is associated with the transmitter 30 from which the received data originated. The reception controller 44 also causes the display 50 to show data relating to the air pressure. Particularly, when there is an abnormality in the pressure of the tire 20, the reception controller 44 accordingly displays a warning on the display 50.

Furthermore, the receiver 40 is provided with an initiator drive circuit 46 for driving the initiator 60 of each transmitter 30. The initiator drive circuit 46 is controlled by the reception controller 44 and wirelessly transmits trigger signals from the initiators 60, each of which corresponds to one of the transmitters 30, at predetermined time intervals (for example, every 15 seconds). The transmission timing of each initiator 60 is adjusted such that each initiator 60 wirelessly transmits the trigger signal at a timing that differs from that of the other initiators 60. Therefore, two or more of the initiators 60 do not wirelessly transmit trigger signals simultaneously.

A radio wave in the long wave band (30 kHz to 300 kHz) is used as the trigger signal. This is under the assumption that a reflected wave may be generated when the vehicle 10 reflects the trigger signal. It has been confirmed that there is no susceptibility to interference caused by reflected waves from the vehicle 10 when the trigger signal is in the long wave band. Therefore, the trigger signal reception antenna 36 of the transmitter 30 receives the trigger signal at any rotation angle of the tire 20. Accordingly, data representing the condition of the tire 20 may be transmitted and received between the transmitter 30 and the receiver 40 even when the vehicle 10 is moving.

Furthermore, the output of the initiator drive circuit 46 is easily restricted when the trigger signal is in the long wave band. Thus, the transmission range of the trigger signal transmitted from each initiator 60 may be limited. The output of the initiator drive circuit 46 is restricted to enable detection of the trigger signal transmitted from the initiator 60 with only the transmitter 30 associated with that initiator 60. Accordingly, when the receiver 40 receives data transmitted from the transmitter 30 in response to a trigger signal, the tire 20 incorporating that transmitter 30 is easily located by the receiver 40.

The operation of the tire condition monitoring apparatus 1 will now be described.

First, when the reception controller 44 of the receiver 40 causes any one of the initiators 60 to wirelessly transmit a trigger signal, the trigger signal detection circuit 35 of the associated transmitter 30 detects the trigger signal through the trigger signal reception antenna 36. The trigger signal detection circuit 35 informs its transmitter controller 31 that a trigger signal has been detected. The transmitter controller 31 then measures the air pressure of the corresponding tire 20 with the pressure sensor 32 and generates air pressure data obtained through the measurement. The transmitter controller 31 sends data, which includes the air pressure data, to the transmission circuit 33. The transmission circuit 33 encodes and modulates the data sent from the transmitter controller 31. The transmission circuit 33 then wirelessly transmits the data (response signal) through the transmission antenna 34.

When the receiver 40 receives the data transmitted from the transmitter 30 through the reception antenna 41, the receiver 40 determines that the data was sent from that transmitter 30 in response to the trigger signal. As a result, the receiver 40 locates the tire 20 incorporating the transmitter 30 that responded to the trigger signal.

This preferred embodiment has the advantages described below.
(1) Each initiator 60 is arranged on the associated nonmetallic mudguard 12. That is, the initiator 60 is arranged on the nonmetallic mudguard 12 separated from metals, such as the body frame 11. Therefore, metals do not influence the radio waves from the transmitter 30, and the mudguard 12 insignificantly affects the signal receiving performance of the receiver 40. This ensures that the transmitters 30 detect the trigger signal for obtaining the data representing the condition of the tire 20 and wirelessly transmit the data to the receiver 40. As a result, the transfer of data representing the condition of the tire 20 between each transmitter 30 and the receiver 40 is ensured.
(2) The initiator 60 is arranged on the surface of the mudguard 12 facing towards the tire 20. Therefore, the initiator 60 cannot be seen from behind the vehicle 10. The initiator 60 is thus installed without impairing the aesthetic appearance of the vehicle 10.
(3) A radio wave in the low frequency band (30 kHz to 300 kHz) is used as the trigger signal. Therefore, there is no susceptibility to interference from reflected waves even when reflected waves are generated. Therefore, the trigger signal reception antenna 36 of the transmitter 30 receives the trigger signal at any rotation angle of the tire 20. Accordingly, data representing the condition of the tire 20 is transferred between the transmitter 30 and the receiver 40 even when the vehicle 10 is moving.

It should be apparent to those skilled in the art that the present invention may be embodied in many other specific forms without departing from the spirit or scope of the invention. Particularly, it should be understood that the invention may be embodied in the following forms.

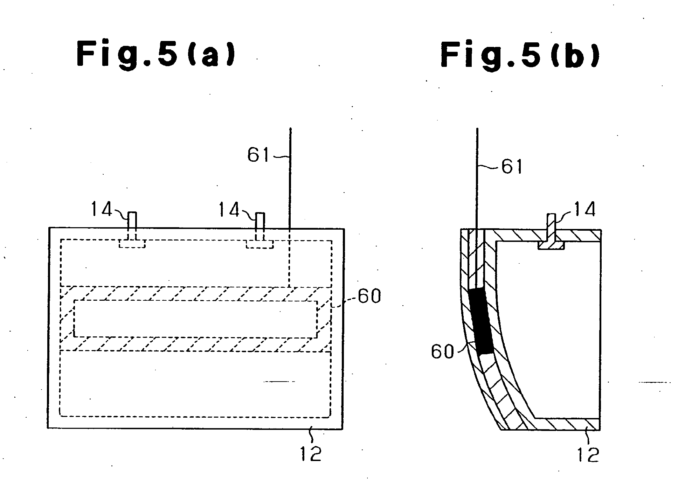

As shown in Figs. 5(a) and 5(b), the initiator 60 may be incorporated in the mudguard 12. In this case, the initiator 60 is held between two resin sheets forming the mudguard 12. Alternatively, the initiator 60 may be embedded integrally in the mudguard 12 when forming the mudguard 12. With such structures, the initiators 60 would not be visible. Thus, the transmitter 30 detects the trigger signal from the initiator 60 without impairing the aesthetic appearance of the mudguard 12.

Furthermore, since the initiator 60 is not exposed, the initiator 60 is prevented from being damaged or deteriorated.

The initiators 60 may be provided in side spoilers made of an insulating material such as polypropylene (PP) or ABS resin. Particularly, the initiators 60 may be provided in portions of the side spoilers that are adjacent to the tires 20.

The initiators 60 may be provided in a rear under spoiler made of an insulating material such as polypropylene (PP) or ABS resin. Particularly, the initiators 60 may be provided in portions of the rear under spoiler that are adjacent to the tires 20.

When the vehicle 10 has a side step, such as that of a four-wheel drive vehicle, the initiator 60 may be provided in a nonmetallic element such as a resin molding of the side step.

When there is an abnormality in the pressure of the tire 20, the abnormality may be indicated by a sound. In addition, a speaker that is mounted on the vehicle 10 in advance may be used as a notifying device.

Air pressure data transmitted by the transmitter 30 may indicate the value of the air pressure or whether the air pressure is within a permissible range.

A temperature sensor may be provided on the transmitter 30 to wirelessly transmit air pressure data and internal temperature data of the tire 20 from the transmitter 30 as data representing the tire condition.

Other than four-wheeled vehicles, the present invention may be applied to two-wheeled vehicles, such as bicycles and motorcycles, multi-wheeled buses, multi-wheeled trailers and industrial vehicles, such as forklifts. When the present invention is applied to a trailer, the receiver 40 and the display 50 are provided in the tractor.

The initiator may also be arranged in a rubber mudguard of a large vehicle, such as a multi-wheeled truck, bus, tractor-towed vehicles and the like, that is, in the rubber part of the mud guard nearest the tire 20.

Therefore, the present examples and embodiments are to be considered as illustrative and not restrictive and the invention is not to be limited to the details given herein, but may be modified within the scope and equivalence of the appended claims.

## Claims

1. An apparatus for monitoring a condition of a tire on a vehicle, wherein the vehicle includes a nonmetallic portion near the tire and a body frame, the apparatus **characterized by**:
an initiator arranged on the nonmetallic portion, the initiator transmitting a trigger signal;
a transmitter arranged in the tire, wherein the transmitter includes a sensor for detecting the condition of the tire, a receiving section for receiving the trigger signal, and a transmission section for transmitting a response signal when the receiving section receives the trigger signal, the response signal including information related with the condition of the tire detected by the sensor; and
a receiver arranged on the body frame, wherein the receiver includes a reception section for receiving the response signal from the transmitter and a controller for controlling the transmission of the trigger signal from the initiator.

2. The apparatus according to claim 1, **characterized in that** the nonmetallic portion is a mudguard.

3. The apparatus according to claim 2, **characterized in that** the initiator is arranged on a surface of the mudguard facing towards the tire.

4. The apparatus according to claim 2, **characterized in that** the initiator is embedded in the mudguard.

5. The apparatus according to any one of claims 1 to 4, **characterized in that** the trigger signal is a wireless signal having a frequency corresponding to a long wave band.

6. The apparatus according to any one of claims 1 to 5, **characterized in that** the sensor detects the condition of the tire when the reception section receives the trigger signal, and the transmission section transmits the response signal including information related with the condition of the tire detected by the sensor in response to the trigger signal.

7. The apparatus according to any one of claims 1 to 6, **characterized in that** the controller controls the initiator to transmit the trigger signal periodically.

8. The apparatus according to any one of claims 1 to 7, **characterized in that** the tire is one of a plurality of tires, the nonmetallic portion is one of a plurality of nonmetallic portions, each nonmetallic portion is located near one of the tires, the initiator is one of a plurality of initiators, each initiator is arranged on one of the nonmetallic portions, the transmitter is one of a plurality of transmitters, each transmitter is arranged in one of the tires, and the controller controls the initiators to transmit the trigger signal at timings that differ between the initiators.

9. The apparatus according to any one of claims 1 to 7, **characterized in that** the tire is one of a plurality of tires, the nonmetallic portion is one of a plurality of nonmetallic portions, each nonmetallic portion is located near one of the tires, the initiator is one of a plurality of initiators, each initiator is arranged on one of the nonmetallic portions, the transmitter is one of a plurality of transmitters, each transmitter is arranged in one of the tires, and the response signal transmitted from the transmission section of each transmitter contains unique identification information that is allocated to the transmitter beforehand.

10. The apparatus according to any one of claims 1 to 9,
**characterized in that** the initiator is located in the vehicle at a portion that cannot be substantially seen from behind the vehicle.
